# EUROPEAN PATENT SPECIFICATION

(11) **EP 2 227 710 B1**
(45) Date of publication and mention of the grant of the patent: **12.02.2014**
(21) Application number: 08869848.5
(22) Date of filing: 09.12.2008
(51) Int. Cl.: G02B 6/245, G02B 6/44

(54) **TOOL FOR ACCESS TO OPTICAL FIBRES**
WERKZEUG FÜR DEN ZUGANG ZU OPTISCHEN FASERN
OUTIL D'ACCÈS À DES FIBRES OPTIQUES

(30) Priority: 04.01.2008 IT MI20080008
(43) Date of publication of application: 15.09.2010
(73) Proprietor: Prysmian S.p.A., 20126 Milano (IT)
(72) Inventor: LE DISSEZ, Arnaud, I-20126 Milano (IT); PIRRI, Alessandro, I-20126 Milano (IT)
(74) Representative: Mancini, Vincenzo
(86) International application number: PCT/EP2008/067146
(87) International publication number: WO 2009/087007

(56) References cited:
- WO-A-01/39642
- DE-A1- 2 316 102
- JP-A- 2002 064 916
- US-A- 1 021 631
- US-A- 2 627 768
- US-A- 4 434 554
- US-A- 4 972 581

## Description

The present invention relates to a tool for access to optical fibres contained inside a monotube type cable for optical fibres, according to the preamble of the main claim.

The use of optical fibres as a transmission means is conventionally known in prior art. To protect said optical fibres during installation and successive set-up, it is a known practice to house a plurality of fibres inside cables for monotube optical fibres.

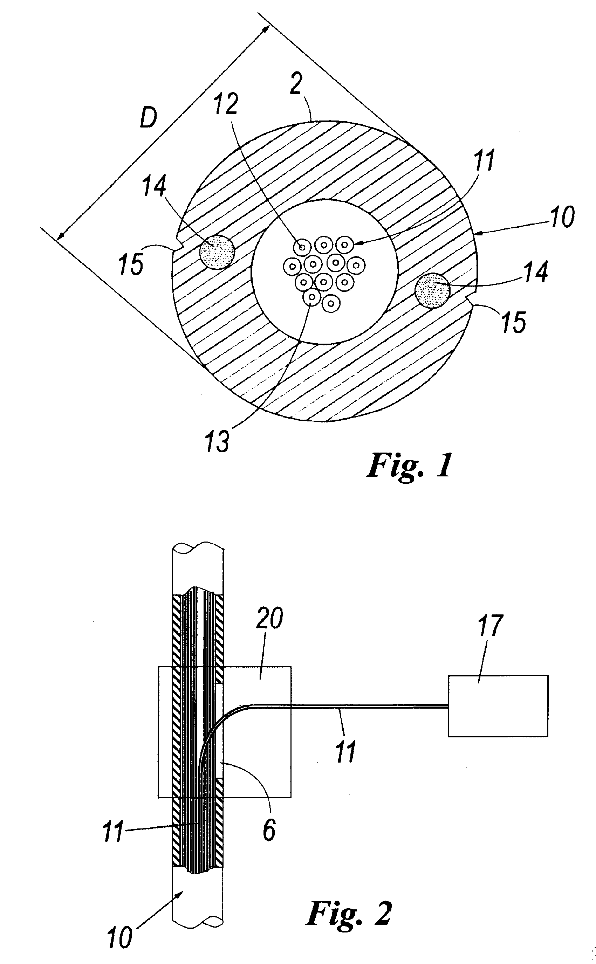

Figure 1 shows a transversal section of a conventionally known cable for optical fibres 10 comprising a tube 2 that forms an internal channel wherein a plurality of optical fibres 11 is contained. Each optical fibre 11 comprises a transmission nucleus 12 coated with at least one layer of polymer coating 13. Reinforcing elements 14 are also included in the thickness of the tube wall 2 to provide the cable with the mechanical properties required for its intended use.

The tube 2 is generally made from a thermoplastic material, and the reinforcing elements 14 are made of fibre glass, for example.

For added convenience, grooves 15 are created on the external surface of the cable 10 in proximity to the reinforcing elements 14 in order to simplify the identification of their position.

In a typical application, the cables 10 containing the optical fibres 11 are laid along the walls of a building, often with long sections in a vertical direction.

As shown in figure 2, openings 6 are created in said cables 10 to provide access to an optical fibre 11 positioned inside a cable 10, for example, in such a manner so that the said optical fibre 11 can be extracted from the cable in question and delivered to the end user 17.

USA patents 5,140,751 and 5,577,150 describe tools for access to optical fibres. Said tools completely enclose the sheath wherein the openings are to be made and therefore, especially when cables are fixed to a support, said tools are cumbersome to use.

DE 2316102 discloses a tool for mechanically removing the insulating covering of a cable by a knife-like blade wherein the body is apt to support the blade, the blade having a cutting edge extending itself substantially perpendicularly to the axis of the body and being constrained to the body in a basculating way. An element combined with the tool body, pushing the cable against the blade, is also disclosed.

US 4,972,581 describes an apparatus for removing a portion of a buffer tube used in a loose tube type of optical fiber cable in order to selectively access an optical fiber found therein. Said apparatus includes three major parts: a body, a clamp and a blade.

JP 2002-064916 describes a tool for stripping a cable insulator comprising a handle, a blade and a cable holding part apt to maintain the positional relation between the cable and the blade, thus enabling the cable to travel in a longitudinal direction.

WO 01/39642 discloses a tool for peeling vegetables or fruit, comprising a grip with a knife attached to it characterised by the fact that the knife is provided with a curvature which at least partly corresponds with a curvature in a transversal direction of the vegetable or fruit.

US 1,021,631 discloses a plane able to bevel the edge of a board or other similar object to a given depth and a device by means of which the edge of a board may be bevelled with means for varying the depth and angle of the cut.

The Applicant approached the problem of providing a tool for rapid access to optical fibres contained within a monotube, including those cases wherein the monotube is already fixed to a support.

According to the present invention, the Applicant has provided a tool (1) for access to optical fibres contained in a cable (10) according to claim 1.

Preferably, the tool according to the invention comprises a gripping means attached to the body. Said gripping means can also include a handle.

Said handle can be set in a slanted position in relation to the longitudinal axis of the longitudinal recess.

Alternatively, said handle can be set perpendicular to the longitudinal axis of the longitudinal recess.

The body of the tool of the invention has a substantially U-shaped transversal section, to define the internal sidewalls between which the blade is fixed.

Advantageously, the blade of the tool forms an acute angle in relation to the longitudinal axis of the longitudinal recess.

Preferably, said angle is comprised between 10° and 40°.

Preferably, the tool according to the invention has a body with rounded edges on at least one end.

Advantageously the body of the tool is made from a plastic material.

Further details are provided in the following description of an embodiment shown in the appended drawings wherein:
Figure 1 shows a sectional view of a conventionally known cable for optical fibres, comprising a tubular element containing a plurality of optical fibres;
Figure 2 shows a system comprising optical fibres contained within a tubular cable of the type shown in figure 1;
Figure 3 shows a perspective view of a first embodiment of a tool according to the invention, when in use;
Figures 4 to 6 show respective side, bottom and front views of the tool shown in 3;
Figures 7 to 10 show respective side, bottom, front and rear views of a second embodiment of the tool of the invention.

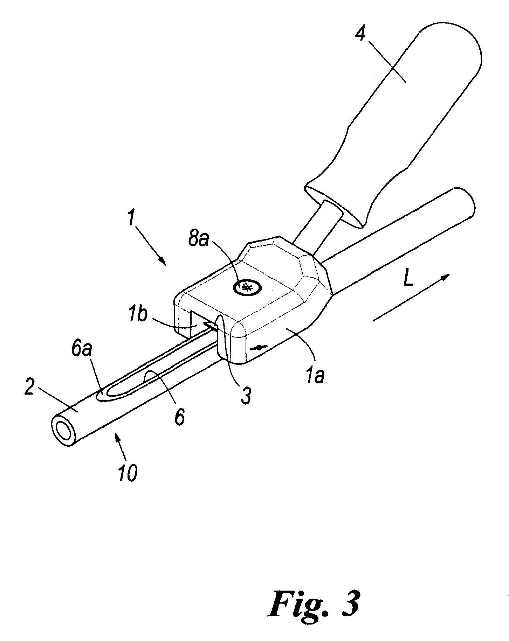

With reference to figure 3, a tool 1 is applied onto the tube 2 of an optical fibre cable 10 for access to the optical fibres, which are contained therein.

The tool 1 comprises a body 1a having a longitudinal recess 1b for the partial housing of a section of the cable 10.

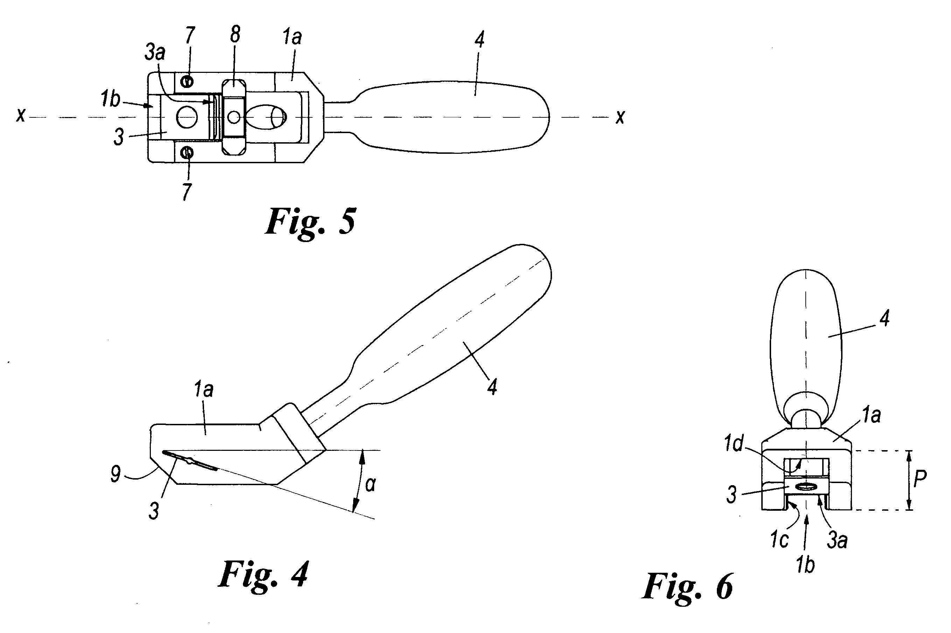

A blade 3, having a cutting edge 3a, visible in figure 5, is attached to the body 1a, crossing said recess 1b on a slant α in relation to the longitudinal axis x-x of the recess 1b.

When the tool is applied on the cable 10, in a manner so that it is positioned inside the recess 1b, the blade 3 penetrates the cable 10.

The body 1a of the tool 1 comprises a handle 4, or some similar gripping means, to permit its manoeuvring.

In particular, in the embodiment of the invention shown in figure 3, the handle 4 is positioned on a slant in relation to the extension direction of the section of cable 10 wherein the opening 6 is to be performed.

The recess 1b of the body 1a has a U-shaped section, defining the internal sidewalls 1c and an end wall 1d. The blade 3 is fixed between the internal sidewalls 1c.

The blade 3 has a typically rectangular shape and can be of the replaceable type.

The blade 3 is fixed to the body 1a of the tool by fixing means, preferably removable, such as screws 7, rivets, or similar fixing means, for example.

The blade 3 forms an acute angle α in relation to the longitudinal axis x-x of the recess 1b. Preferably, the angle α is comprised between 10° and 40°, ends included. The cutting edge 3a faces the open area towards the exterior of the recess 1b.

Advantageously, the distance between the sidewalls 1c is basically equal to the external diameter D of the largest sized foreseen cable 10 (for example: a cable containing 48 optical fibres). The cutting edge 3a of the blade 3 is positioned at a distance from the end wall 1d of the recess, which is less than half of the external diameter D of the largest sized foreseen cable 10 that can be used with the tool according to the invention.

Spacer elements 8 can be foreseen within the longitudinal recess 1b to adapt the body 1a to the various diameters of cable 10.

For example, these spacer elements 8 are specifically shaped elements with a basically U-shaped recess, which are inserted within the recess 1b, to reduce the depth P of the recess 1b, in question.

Said spacer elements 8 are dimensioned in relation to a corresponding cable size, which measures less than the maximum size, or in relation to a group of cable sizes, in such a manner that the distance from the end wall defined by the spacer element is less than half of the external diameter D of said cable of a lesser size.

Said spacer elements 8 can be fixed to the body by press-fitting or fixed joint, or by means of removable fixing elements, such as a screw 8a, for example.

In an alternative embodiment, not illustrated herein, the longitudinal recess 1a can have a transversal section with a semicircular or triangular shape, or some other form, suitable to contain the cable in a controlled position.

Advantageously, the body of the tool according to the invention can be made from a plastic material, produced by a moulding process, for example.

The creation of the opening in the tube 2 of the cable 10 occurs in the following manner.

The tool 1 is positioned over the cable 10, housing the cable in question within the longitudinal recess 1a, as shown in figure 3.

By exercising controlled pressure on the cable, the tool is pulled along the cable 10 in question, in the cutting direction L, parallel to the axis of cable 10 (or at least, to the axis of the section of cable 10 that requires the cutting of an opening).

In this manner, the blade 3 progressively penetrates through the tube wall 2, as far as defined by the depth of the recess 1b (or by the spacer element 8 that corresponds with the size of the cable on which it is operating) and removes a portion of the tube wall 2 in question, thus creating an opening 6.

In this manner, an opening 6 is formed having a substantially rectilinear longitudinal profile, parallel to the axis of the tube 2, connected to an oblique entry portion 6a and to a corresponding exit portion, not illustrated herein.

The tool according to the invention can be advantageously used on cables 10 that present a pair of longitudinal reinforcing elements 14 set into the thickness of the tube wall 2 in diametrically opposite positions, without the blade 3 tampering with said reinforcing elements, since the distance between the cutting edge 3a of the blade in question, and the end wall 1d of the recess 1b limits the blade penetration in the tube wall 2, in a controlled manner.

Figures from 7 to 10 show a second embodiment of the tool according to the invention.

All elements of the tool having the same characteristics and functions, as the tool 1 of the first embodiment will be identified with the same reference numbers.

Advantageously, according to this embodiment, the tool 1 comprises a handle 4 mechanically connected to the body 1a and substantially positioned perpendicular to the axis of the recess 1b, in turn parallel to the cutting direction L.

The body 1a is a specifically shaped element comprising a longitudinal recess 1b, with a U-shaped transversal section defining sidewalls 1c and an end wall 1d.

The blade 3 is fixed to the body 1a through the recess 1b and is fixed to the body 1a by means of screws 7 or similar means, for example.

A connecting element 4b connects the handle 4 to the body 1a in a fixed manner.

Advantageously, the connection 4b is an integrated part of the body 1a.

Said embodiment of the tool 1 according to the invention is particularly advantageous when the cable 10 is housed inside a box 20, as shown schematically in figure 2.

In fact, in this embodiment, the tool 1 can be produced with very compact dimensions, suitable to permit access to the cable even when the cable portion in question requiring intervention is contained in a compartment of reduced size.

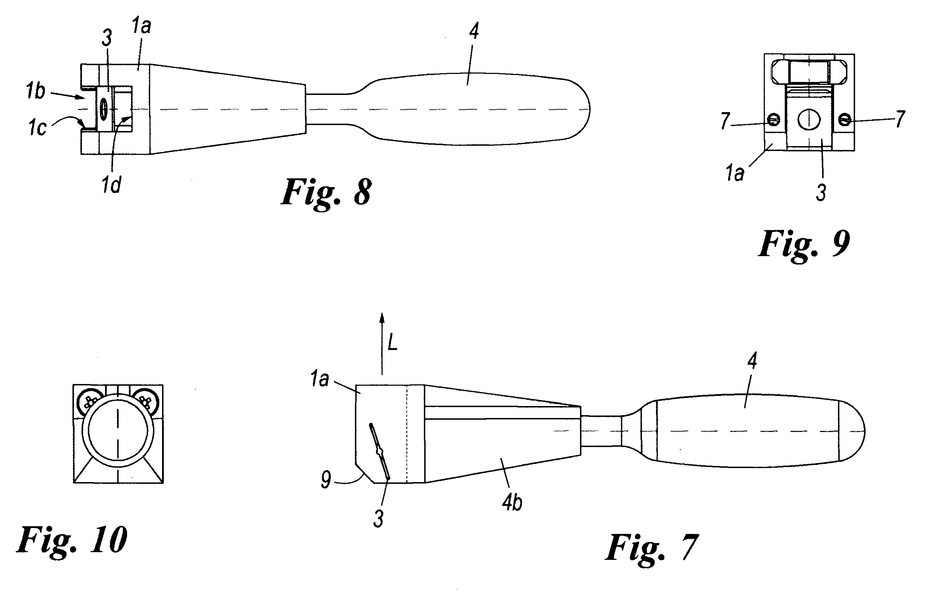

Advantageously, as shown in figures 4 and 7, for example, the rear end of the body (in relation to the cutting direction L) has rounded edges conceived to facilitate the release of the tool 1 from the cable 10 after the cutting operation of the opening 6 has been completed.

In conclusion, the tool according to the invention permits rapid access to the optical fibres contained in monotube cables, providing very regular shaped openings, even when said cables are fixed to a support or are contained inside a box element, even of a reduced size.

## Claims

1. Tool (1) for access to optical fibres contained in a cable (10) comprising:
- a body (1a) having a longitudinal recess (1b) along a longitudinal axis and having internal sidewalls (1c), conceived to partially contain a section of the cable (10);
- a blade (3) having a cutting edge (3a), attached to the body (1a) and fixed transversally in said recess (1b) between the internal sidewalls (1c) at a predetermined slant in relation to the longitudinal axis of said recess (1b); and,
**characterized in that** it further comprises an insertable spacer element (8) within the recess (1b) which is dimensioned in relation to the cable size to adapt the body (1a) to cables of various diameters.

2. Tool according to claim 1, **characterised in that** it comprises a gripping means (4) fixed to form part of body (1a).

3. Tool according to claim 1, **characterised in that** the body (1a) has a substantially U-shaped transversal section defining internal side walls between which the blade is fixed.

4. Tool according to claim 1, **characterised in that** the blade (3) forms an acute angle α in relation to the longitudinal axis of the longitudinal recess (1b).

5. Tool according to claim 2, **characterised in that** the angle α is comprised between 10° and 40°.

6. Tool according to claim 2, **characterised in that** the gripping means (4) comprises a handle.

7. Tool (1) according to claim 6, **characterised in that** the handle is set on a slant in relation to the longitudinal axis of the longitudinal recess (1b).

8. Tool according to claim 6, **characterised in that** the handle is perpendicular in relation to the longitudinal axis of the longitudinal recess (1b).

9. Tool according to claim 1, **characterised in that** the body (1a) has one end with rounded edges (9).

10. Tool according to claim 1, **characterised in that** the body (1a) is made from a plastic material.

## Patentansprüche

1. Werkzeug (1) für den Zugang zu optischen Fasern, die in einem Kabel (10) enthalten sind, mit:
- einem Körper (1a), der eine längliche Ausnehmung (1b) entlang einer Längsachse aufweist, und innere Seitenwände (1c) aufweist, die ausgelegt sind, einen Bereich des Kabels (10) teilweise aufzunehmen;
- eine Klinge (3) mit einer Schneidkante (3a), die an dem Körper (1a) angebracht ist, und in der Ausnehmung (1b), zwischen den inneren Seitenwänden (1c), in einer vorbestimmten Neigung in Bezug zur Längsachse der Ausnehmung (1b), schräg befestigt ist; und
**dadurch gekennzeichnet, dass** es ferner ein einführbares Abstandselement (8) innerhalb der Ausnehmung (1b) aufweist, das in Relation zur Kabelgröße dimensioniert ist, um den Körper (1a) an Kabel verschiedenen Durchmessers anzupassen.

2. Werkzeug nach Anspruch 1, **dadurch gekennzeichnet, dass** es eine Greifeinrichtung (4) aufweist, die derart befestigt ist, dass sie Teil des Körpers (1a) ist.

3. Werkzeug nach Anspruch 1, **dadurch gekennzeichnet, dass** der Körper (1a) einen im Wesentlichen U-förmigen, schrägen Bereich aufweist, der Innenseitenwände definiert, zwischen denen die Klinge befestigt ist.

4. Werkzeug nach Anspruch 1, **dadurch gekennzeichnet, dass** die Klinge (3) in Bezug zur Längsachse der länglichen Ausnehmung (1b) einen spitzen Winkel α bildet.

5. Werkzeug nach Anspruch 2, **dadurch gekennzeichnet, dass** der Winkel α zwischen 10° und 40° liegt.

6. Werkzeug nach Anspruch 2, **dadurch gekennzeichnet, dass** die Greifeinrichtung (4) einen Griff aufweist.

7. Werkzeug (1) nach Anspruch 6, **dadurch gekennzeichnet, dass** der Griff in Bezug zur Längsachse der länglichen Ausnehmung (1b) auf einer Schrägeangeordnet ist.

8. Werkzeug nach Anspruch 6, **dadurch gekennzeichnet, dass** der Griff in Bezug zur Längsachse der länglichen Ausnehmung (1b) senkrecht ist.

9. Werkzeug nach Anspruch 1, **dadurch gekennzeichnet, dass** der Körper (1a) ein Ende mit abgerundeten Kanten (9) aufweist.

10. Werkzeug nach Anspruch 1, **dadurch gekennzeichnet, dass** der Körper (1a) aus einem Plastikmaterial ausgebildet ist.

## Revendications

1. Outil (1) d'accès à des fibres optiques contenues dans un câble (10), comprenant :
- un corps (1a) ayant un évidement longitudinal (1b) le long d'un axe longitudinal et ayant des parois latérales internes (1c), conçu pour contenir partiellement une section du câble (10) ;
- une lame (3) ayant un bord tranchant (3a), attachée au corps (1a) et fixée transversalement dans ledit évidement (1b) entre les parois latérales internes (1c) à une inclinaison prédéterminée par rapport à l'axe longitudinal dudit évidement (1b) ; et
**caractérisé en ce qu'**il comprend en outre
- un élément d'entretoise insérable (8) au sein de l'évidement (1b) qui est dimensionné en rapport avec la taille du câble pour adapter le corps (1a) à des câbles de divers diamètres.

2. Outil selon la revendication 1, **caractérisé en ce qu'**il comprend un moyen de saisie (4) fixé pour former une partie du corps (1a).

3. Outil selon la revendication 1, **caractérisé en ce que** le corps (1a) a une section transversale sensiblement en forme de U définissant des parois latérales internes entre lesquelles la lame est fixée.

4. Outil selon la revendication 1, **caractérisé en ce que** la lame (3) forme un angle aigu α par rapport à l'axe longitudinal de l'évidement longitudinal (1b).

5. Outil selon la revendication 2, **caractérisé en ce que** l'angle α est compris entre 10° et 40°.

6. Outil selon la revendication 2, **caractérisé en ce que** le moyen de saisie (4) comprend un manche.

7. Outil (1) selon la revendication 6, **caractérisé en ce que** le manche est établi sur une inclinaison par rapport à l'axe longitudinal de l'évidement longitudinal (1b).

8. Outil selon la revendication 6, **caractérisé en ce que** le manche est perpendiculaire par rapport à l'axe longitudinal de l'évidement longitudinal (1b).

9. Outil selon la revendication 1, **caractérisé en ce que** le corps (1a) a une extrémité avec des bords arrondis (9).

10. Outil selon la revendication 1, **caractérisé en ce que** le corps (1a) est constitué d'une matière plastique.
